Europäisches Patentamt

**European Patent Office**

**Office européen des brevets**

(11) Publication number: **0 066 763**
A1

## EUROPEAN PATENT APPLICATION

(21) Application number: **82104497.1**

(22) Date of filing: **22.05.82**

(51) Int. Cl.³: **G 01 T 1/164**

(30) Priority: **26.05.81 DK 2304/81**

(43) Date of publication of application: **15.12.82**
**Bulletin 82/50**

(84) Designated Contracting States: **BE DE FR GB IT NL SE**

(71) Applicant: **GENERAL ELECTRIC COMPANY, 1 River Road, Schenectady New York 12305 (US)**

(72) Inventor: **Pedersen, Lars Mathisen, Kaervej 23-25, DK-2970 Horsholm (DK)**

(74) Representative: **Voigt, Reinhard, Dipl.-Ing. et al, Kaiserstrasse 41, D-6000 Frankfurt (Main) 1 (DE)**

(54) **Device for automatic amplification control of a gamma camera.**

(57) A device in a gamma camera for automatic amplification control of the photomultiplier tubes thereof. A plurality of light emitting diodes are supplied power from a continuously working pulse generator and the light therefrom impinges directly or after reflection, on the cathodes of the photomultiplier tubes. A control circuit for each photomultiplier tube acts to control the potential difference between two dynodes in the tube and comprises a peak detector coupled to the output of the associated photomultiplier tube, with the output signal thereof going to a comparator for comparison with an adjustable stable reference voltage. The output of the comparator is connected to a resistance control circuit connected over the two dynodes, such that a continuous recalibration of the amplification of each photomultiplier tube is made during use of the gamma camera.

## Device for Automatic Amplification Control Of A Gamma Camera

The present invention relates generally to a device for a gamma camera, and more particularly, an automatic amplification control of the photomultiplier tubes thereof. It comprises an auxiliary radiation source and a control circuit for each photomultiplier tube for controlling the potential difference between two dynodes in the tube.

It is necessary, because of inevitable differences in the manufacture of photomultiplier tubes, among other things, that the amplification in each tube of scintillation signals received can be separately adjusted so as to equalize the sensibility of all the tubes. To achieve this, each tube is provided with an individual potentiometer to be adjusted in an initial calibration by means of a collimated punctiform gamma radiation source emitting a very narrow gamma radiation bunch into the photomultiplier tube. However, the calibration thus obtained is rather unstable, particularly during the first working time. Therefore, it has been necessary to repeat said calibration at frequent intervals, e.g., of a few days. The procedure, of course, was complicated and expensive and was often not carried out in a manner which would ensure that the results of the examination were exact.

Circuits are also known for automatic recalibration of the amplification of the photomultiplier tubes. According to the U.S. Patent No. 4,047,034, light is emitted from a single light emitting diode through a number of identical optical fibres terminating at a glass sheet arranged under the photomultiplier tubes in order to obtain a uniformly defined illumination of all photomultiplier tubes. By means of this illumination the amplification of the scintillation signal is stabilized before use, a compensation for deviations of the amplification factor of the tubes beyond upper and lower limits by means of a resistance bridge being periodically made in the amplification circuits connected to the photomultiplier tubes. A disadvantage of this construction is that the illumination of the photomultiplier tubes has to be uniform and is very low because of the optical fibres used. Further, the signal amplification is only periodically controlled when the deviations exceed the fixed limits.

In U.S. Patent No. 4,079,257, a plurality of auxiliary isotope sources are mounted between the photomultiplier tubes, and have an energy different from the energy of the radio isotope applied during the use of the gamma camera. An amplification control circuit associated with each photomultiplier tube comprises threshold circuits for the isolation of the signals originating from the auxiliary isotope sources and integrator and comparator circuits for providing an error signal at intervals after the counting of a certain number of scintillation events are created by the auxiliary isotope sources. The error signal, via a programmable power supply circuit, influences the potential difference between two dynodes in the photomultiplier tube. This construction is disadvantageous in that a plurality of auxiliary isotope sources must be used, which sources, in connection with the necessary threshold circuit etc., imply a considerable complication and increase in cost. Further, the amplification control can only be carried out at intervals.

The object of the present invention is to provide a device whereby a fully continuous amplification control can be obtained and is of a very simple construction.

According to the invention the auxiliary radiation source comprises of a plurality of light emitting diodes located in relation to the photomultiplier tubes so that the light therefrom directly or after reflection, impinges on the cathodes of the tubes. The diodes are supplied power from the continuously working pulse generator, and each control circuit comprises a peak detector connected to the output of the associated photomultiplier tube. The output signal of the detector is the input to a comparator which is also provided with an adjustable stable reference voltage input. The output of the comparator is connected to a resistance control circuit inter-connected between the two dynodes. By means of the light emitting diodes, an intense pulse illumination of the photomultiplier tubes is permanently achieved, whereby the signals deriving therefrom are much more powerful than the scintillation signals during use of the gamma camera. As a result, the control circuit for the separation of the light pulses from the gamms impulses and for the change of the amplification of the photomultiplier tubes can be simple, and the control is continuously carried out in response to the pulse generator driving the diodes. A further important advantage of the device according to the invention is that the amplification adjustment of the individual photomultiplier tubes is essentially independent of the level of the illumination of the tubes when said illumination is continuously stable.

In a particularly simple embodiment of the device according to the invention the light emitting diodes are arranged in the gaps between the photomultiplier tubes. Alternatively, the light emitting diodes can be arranged at the outer circumference of the juxtaposed photomultiplier tubes which particularly is an advantage if the tubes have such a polygonal shape that they can be arranged closely adjacent without gaps between them. Such arrangements of the light emitting diodes is possible because there is no need for an equal illumination of the individual photomultiplier tubes.

Furthermore, the light emitting diodes can be arranged inside each individual photomultiplier tube whereby the illumination provided thereby becomes particularly stable.

According to the invention the control circuit comprises a control transistor across two dynodes, the resistance of the transistor being dependent on the differential signal derived from the comparator. As the dynodes in the photomultiplier tubes used for the amplification control normally have a relatively high potential, an optocoupler is preferably connected between the comparator and the resistance control circuit in order to avoid galvanic connection.

According to the invention a time constant circuit can be connected between the input and output of the comparator in order to avoid short term amplification changes that cause an adjustment of the amplification

According to the invention the output of the individual comparators can be connected to an alarm circuit which calls the attention of the operator when an error signal from a comparator exceeds the range in which the amplification control circuit is able to compensate for errors. According to the invention a warning lamp, such as a light emitting diode, can be connected to the output of each comparator in order to indicate directly the photomultiplier tube from which the alarm derives.

The invention will now be further explained with reference to the drawings in which:

Fig. 1 is a top view of a gamma camera comprising a plurality of photomultiplier tubes with light sources for use in connection with the automatic recalibration according to the invention.

Fig. 2 is a partial block diagram of a control circuit for a photomultiplier tube of the gamma camera of Fig. 1 according to the invention, and

Fig. 3 is a more detailed circuit diagram according to the invention.

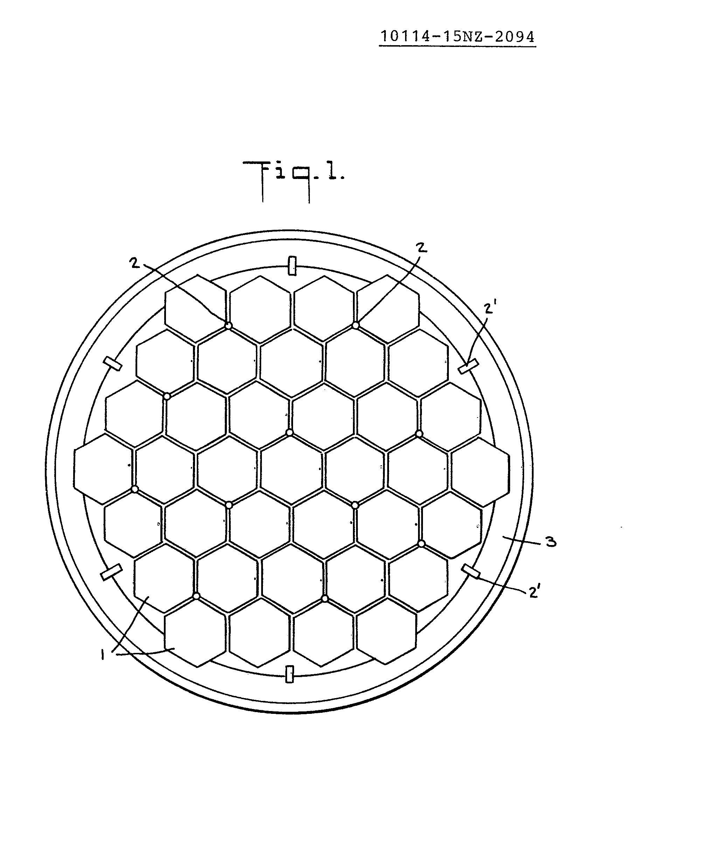

Fig. 1 schematically shows a gamma camera in which a plurality of light emitting diodes 2 are arranged between a plurality of photomultiplier tubes 1, said diodes 2 being approximately distributed between the tubes so that most of the tubes are contiguous to a light emitting diode. In the device shown in the drawing there are 37 photomultiplier tubes and 11 light diodes, with only five of the photomultiplier tubes not being immediately contiguous to a light emitting diode. Alternatively, light emitting diodes 2' can be arranged along the circumference of the camera.

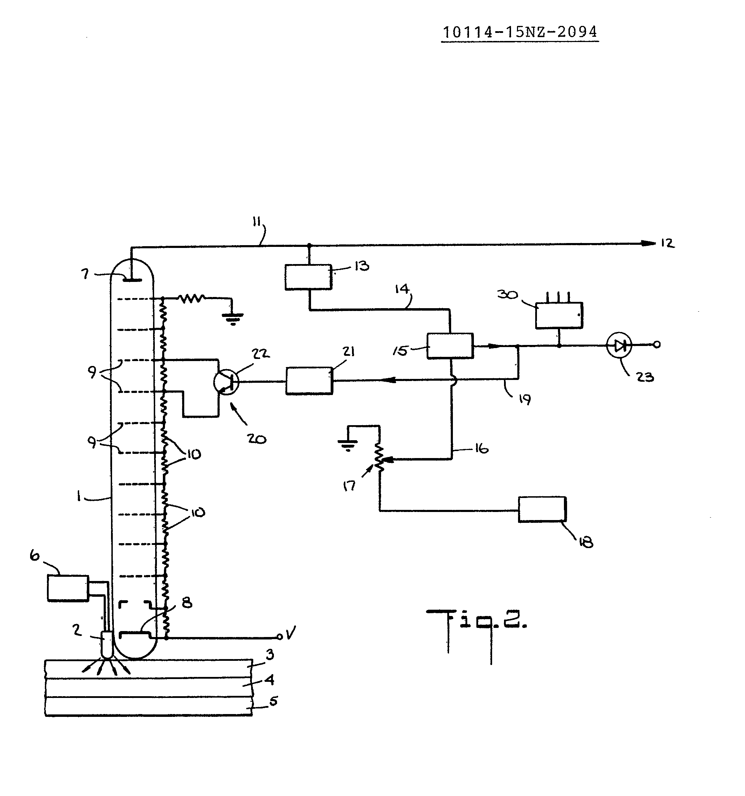

Reference is now made to Fig. 2 wherein a single photomultiplier tube 1 and a light emitting diode 2 contiguous to said tube are shown. Under the photomultiplier tubes 1 there is in the usual way arranged a glass sheet 3, a scintillation crystal 4 and a collimator 5. As indicated with arrows in Fig. 2 the light diodes 2 will illuminate a part of the glass sheet 3 and upon diffuse reflection, especially from the interface between the glass sheet and the crystal, part of the light will be sent upwardly into the closely adjacent photomultiplier tubes as well as into the tubes located at some distance therefrom. As the amount of light provided is very high in comparison with the scintillation light, the illumination achieved in the photomultiplier tubes located at some distance from a light diode is sufficient to make the amplification control circuit work satisfactorily. Accordingly, differences in the illumination in the photomultiplier tubes are adjusted by means of individual reference potentiometers, so that it is immaterial how great the amount of light is received by the individual tubes from the light emitting diodes. As the plurality of photomultiplier tubes must have the same sensitivity with respect to the scintillations of the crystal, a punctiform gamma radiation source is used in the well known manner where the source is placed under the individual tubes in turn in order to carry out the initial individual adjustment of the tubes, after which the circuit according to the invention provides for the continuity of the adjustment.

For this purpose it is necessary that the light from the light emitting diodes is constant with time, and consequently it is also necessary that the light emitting diodes are arranged in a mechanically stable position so as not to turn or change angle with respect to the photomultiplier tubes. To achieve this, the light emitting diodes can be cemented in a light transmitting material, for example. Appropriate types of diodes are molded in semiopaque glass or epoxy, and consequently, the light radiation diagram is rather uniform over $180^{\circ}$. Further, the light output is easily kept constant in time by driving the diodes at a low degree of load.

As shown in Fig. 2 the diodes 2 are connected to a stabilized pulse generator 6 driving the diodes, e.g., with a frequency of 1000 Hz, and the diodes illuminate the photomultiplier tubes 1 for extremely short periods of time. The rise time of the diodes can be e.g., 300 ns. Consequently, the pulse length is of the same order of magnitude as a scintillation in the crystal.

As is further shown in Fig. 2, the photomultiplier tube 1 is supplied with a high voltage between the anode 7 and the cathode 8. A number of dynodes 9 are supplied with voltages dependent on resistances 10 associated therewith.

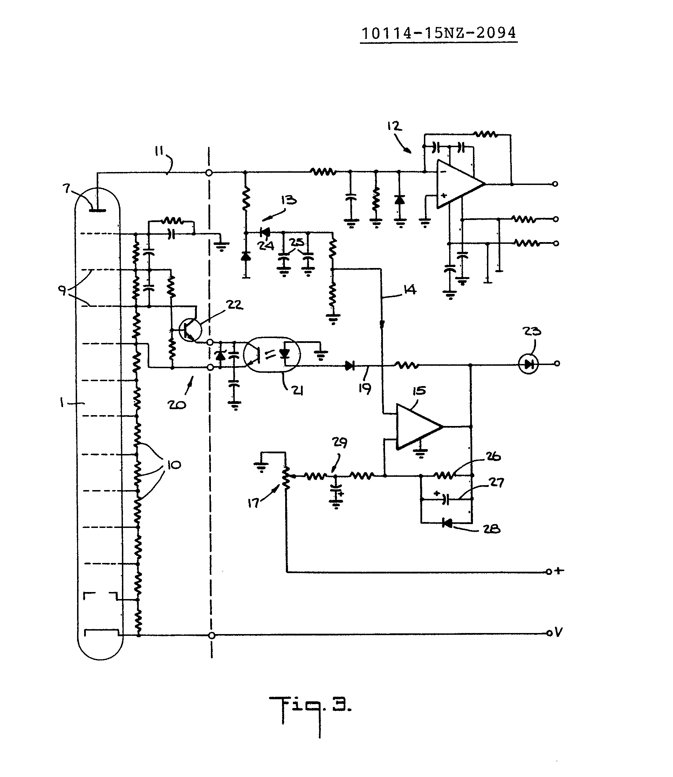

The proper scintillation signal is taken out on a lead 11 and is primarily processed in a preamplifier circuit 12 as shown in Fig. 3. Each photomultiplier tube is provided with an amplification control circuit as shown in Figs. 2 and 3. The circuit comprises a peak detector 13 connected to the lead 11 which rectifies the voltage pulse occuring on the anode when the light emitting diodes receive a pulse from the pulse generator 6. As mentioned above, the voltage pulse is at a much higher level than ordinary scintillation signals. Consequently, a direct current occurs at the output of the detector 13 which current is representative of the actual amplification in the photomultiplier tube. This detector signal is taken via a lead 14 to the one input of a comparator 15, the other input of which is supplied via a lead 16 with a reference voltage from a potentiometer 17 which is connected to a stabilized direct current supply 18. Thus the output signal from the detector 13, i.e., the amplification of the photomultiplier tube, by each flash of light from the diodes 2, is compared with a fixed signal value adjusted by means of the potentiometer 17 by the initial calibration of the photomultiplier tube while using a gamma radiation source.

In case of changes in the amplification of the photomultiplier tube, a differential signal will occur on the output of the comparator 15 which signal is taken via a lead 19 to a resistance control circuit 20 connected across two of the dynodes 9 of the photomultiplier tube. As the dynodes, on which the control preferably is carried out, have potentials of several hundred volts, a optocoupler 21 is interconnected in order to avoid galvanic connection from the detection and comparator circuit. In the embodiment shown the control circuit 20 comprises a control transistor 22 which, when it receives a differential signal from a comparator 15, controls the voltage drop between the two dynodes connected thereto, and thereby adjusts the amplification of the tube until it corresponds to the amplification to which it was originally adjusted, where the different signal is zero. The original adjustment is approximately in the middle of the control range of the transistor 22 which adjustment can be done by appropriate control of the high voltage connected to the tube. In order to ensure that the amplification always is within the possible control range, the output of the comparator can be connected to an alarm 30 common to all photomultiplier tubes which alarm circuit indicates an error to the operator. A light emitting diode 23, connected to the comparator output is switched on by an excessive error signal in order to indicate directly the particular tube in which the error occurs.

In the detailed circuit diagram in Fig. 3 the same references as in Fig. 2 have been used. The detector 13 is shown to comprise rectifiers 24, over which capacitors 25 are charged corresponding to the calibration signal which as mentioned above, is some orders of magnitude higher than the scintillation signals. The comparator 15 shown in the form of an operational amplifier has a resistor 26 connected thereto, determining the loop gain. A capacitor 27 in parallel thereto serves, in connection with the resistor 26, to provide a long time constant in order to prevent the amplification of the photomultiplier tube from being adjusted up and down in accordance with the repetition frequency (1000 Hz in the example). A protection diode 28 is connected in parallel with the capacitor 27. In Fig. 3 a noise filter 29 is shown in the lead 16 from the potentiometer 17. Furthermore, Fig. 3 shows the optocoupier 21 diagrammatically, with the control transistor 22 being connected such that the higher the current running through the lead 19, the lower is the voltage between the two dynodes 9 connected to the transistor. Consequently, the total amplification of the photomultiplier tube is lowered accordingly so that the amplification can be adjusted, until the error signal on the comparator is zero.

10114-15NZ-2094

- 1 -

CLAIMS

1.  A device for automatic amplification control
of the photomultiplier tubes for a gamma camera of the
type having an auxiliary radiation source and a control
circuit associated with each photomultiplier tube for
the control of the potential difference between two
dynodes in the tube, comprising a plurality of light
emitting diodes arranged in relation to the photomultiplier tubes so that the light therefrom directly or
after reflection impinges on the cathodes of the photomultiplier tubes, the diodes being power supplied from
a continuously working pulse generator, and wherein each
control circuit comprises a peak detector coupled to the
output of the associated photomultiplier tube, the output
signal of said detector being taken to a comparator which
is also provided with an adjustable stable reference
voltage, and the output of said comparator being connected
to a resistance control circuit interconnected between the
two dynodes.

2.  A device according to Claim 1, wherein the light
emitting diodes are arranged in gaps between the photomultiplier tubes.

3.  A device according to Claim 1, wherein the light
emitting diodes are arranged at the outer circumference
of the juxtaposed photomultiplier tubes.

4.  A device according to Claim 1, wherein the light emitting diodes are arranged inside each individual photomultiplier tube.

5.  A device according to Claims 1, 2, 3 or 4 wherein the resistance control circuit comprises a control transistor connected between the two dynodes and having a resistance which is variably established in response to the differencial signal derived from the comparator.

6.  A device according to Claims 1, 2, 3, 4 or 5 wherein an optocoupler is connected between the comparator and the resistance control circuit.

7.  A device according to Claims 1, 2, 3, 4, 5, or 6 wherein a time constant circuit is connected between the input and the output of the comparator.

8.  A device according to Claims 1, 2, 3, 4, 5, 6 or 7 wherein the outputs of the comparators are coupled to a common alarm circuit.

9.  A device according to Claims 1, 2, 3, 4, 5, 6, 7 or 8, wherein a warning means is connected to the output of each comparator.

10.  Apparatus for the automatic control of a photomultiplier tube in a gamma camera comprising: a power source, at least one light emitting diode connected to said power supply and adapted to provide light to the photomultiplier tube, and a control circuit coupled to the output of the photomultiplier tube, said control circuit being capable of adjusting a performance parameter of the photomultiplier tube in response to the output thereof, such that the gain of the photomultiplier tube is maintained at a desired constant level.

11.  Apparatus as set forth in Claim 10 wherein said control circuit includes a peak detector for receiving input signals from said photomultiplier tube and providing output signals representative of the amplification of the photomultiplier tube.

12. Apparatus as set forth in Claim 11 wherein said control circuit includes a comparator for receiving said peak detector output signals and comparing them with a reference signal to generate a control signal.

13. Apparatus as set forth in Claim 10 wherein said photomultiplier tube includes a pair of dynodes with a variable resistance therebetween and further wherein said control circuit includes means for adjusting said variable resistance in response to the output of the photomultiplier tube.

14. Apparatus as set forth in Claim 10 wherein said at least one light emitting diodes is connected to and supplied by a pulse generator.

10114-15NZ-2094

Fig.1.

Fig.2.

0066763

3/3

10114-15NZ-2094

Fig. 3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-3 900 731 (CHEVALIER & SEEMAN) * abstract; column 1, lines 9-28, 54-62; column 2, line 6 - column 3, line 32; figures 1,2 * | 1,2,3, 10 | G 01 T 1/164 |
| Y | GB-A- 977 827 (COMMISSARIAT A L'ENERGIE ATOMIQUE) * page 1, lines 12-22, 47-51, 73 - page 2, line 79; claim 1; figure 1 * | 1,5,10 ,13 | |
| A | EP-A-0 023 639 (GENERAL ELECTRIC CO.) * abstract; page 3, line 3 - page 5, line 20; page 7, line 7 - page 8, line 9; page 9, line 31 - page 13, line 14; page 21, line 13 - page 23, line 5; figures 1,2,3,5 * | 1,5,8, 10,11, 13 | **TECHNICAL FIELDS SEARCHED (Int. Cl. ³)** G 01 T |
| D,A | FR-A-2 328 207 (LABORATOIRES D'ELECTRONIQUE ET DE PHYSIQUE APPLIQUEE LEP) * page 1, line 19 - page 2, line 8; page 4, line 3 - page 5, line 13, line 28 - page 6, line 8; page 12, lines 1-30; figures 1-4 * | 1,10, 12 | |

-/-

The present search report has been drawn up for all claims

| Place of search | Date of completion of the search | Examiner |
|---|---|---|
| THE HAGUE | 10-09-1982 | DATTA S. |

European Patent
Office

**EUROPEAN SEARCH REPORT**

0066763

Application number

EP 82 10 4497

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,A | FR-A-2 286 393 (LABORATOIRES D'ELECTRONIQUE ET DE PHYSIQUE APPLIQUEE LEP) <br> * page 1, line 19 - page 2, lines 13, 25-35; page 3, line 13 - page 4, line 19; figures 1-3 * | 1,2,10 | |
| | ----- | | |
| | | | **TECHNICAL FIELDS SEARCHED (Int. Cl. 3)** |

The present search report has been drawn up for all claims

| Place of search | Date of completion of the search | Examiner |
|---|---|---|
| THE HAGUE | 10-09-1982 | DATTA S. |